# EUROPÄISCHE PATENTSCHRIFT

(11) **EP 2 367 659 B1**
(45) Veröffentlichungstag und Bekanntmachung des Hinweises auf die Patenterteilung: **10.07.2019**
(21) Anmeldenummer: 09765066.7
(22) Anmeldetag: 24.11.2009
(51) Int. Cl.: F16C 33/66, F16C 33/76, F16C 35/04, F16C 35/06, H02K 5/124, H02K 5/173, H02K 1/27, H02K 7/18, H02K 15/16

(54) **ELEKTRISCHE MASCHINE MIT ROTORSTÜTZSCHILD**
ELECTRICAL MOTOR HAVING ROTOR SUPPORT SHIELD
MACHINE ÉLECTRIQUE À BOUCLIER D'APPUI DE ROTOR

(30) Priorität: 23.12.2008 DE 102008064497
(43) Veröffentlichungstag der Anmeldung: 28.09.2011
(73) Patentinhaber: Siemens Aktiengesellschaft, 80333 München (DE)
(72) Erfinder: FRIEDL, Daniel, 94081 Fürstenzell (DE); MEMMINGER, Oliver, 94127 Neuburg A.D. Inn (DE)
(86) Internationale Anmeldenummer: PCT/EP2009/065733
(87) Internationale Veröffentlichungsnummer: WO 2010/072497

(56) Entgegenhaltungen:
- DE-A1- 10 033 894
- JP-A- 6 311 687
- US-A- 3 391 291

## Beschreibung

Die vorliegende Erfindung betrifft einen Permanentmagnet-Generator nach dem Oberbegriff des Patentanspruchs 1.

Bei elektrischen Maschinen besteht meist in gewissen Abständen der Bedarf, das Lager des Rotors auszutauschen. Dazu ist der Rotor an einer anderen Komponente der elektrischen Maschine oder an einer eigens dafür vorgesehenen Vorrichtung abzustützen. Bei permanentmagneterregten elektrischen Maschinen haftet der Rotor nicht nur mit Schwerkraft, sondern mit zusätzlicher Magnetkraft an dem Stator, wenn beim Lagertausch der Rotor auf dem Stator abgestützt wird. Es sind dann enorme Kräfte notwendig, um den Rotor wieder vom Stator zu lösen. Dies ist insbesondere problematisch bei Windkraftanlagen, die verhältnismäßig große Generatoren besitzen.

Bislang wird ein Lagerwechsel nur bei fremderregten asynchronen Generatoren mit Hilfe eines Hubzylinders durchgeführt, der zum Stützen und Anheben des Läufers benötigt wird. Der Rotor wird dann auf dem Stator abgelegt. Bei Permanentmagnet-Generatoren ist ein derartiger Lagerwechsel in der Praxis kaum durchführbar.

Aus der Druckschrift US 3 391 291 A ist eine elektrische Maschine bekannt, die eine Welle, auf die ein Rotor montiert ist, und eine Lagereinheit, mit der die Welle drehbar gelagert ist, aufweist. Ferner besitzt sie ein Rotorstützschild, an dem die Lagereinheit befestigt ist, und das so dimensioniert ist, dass es die Welle bei entfernter Lagereinheit zu stützen vermag.

Darüber hinaus beschreibt die Druckschrift JP 0 631 1687 A eine Lagervorrichtung für eine rotatorische elektrische Maschine. Die Maschine besitzt eine Fettkammer an dem Lager, die in ein Lagerschild eingearbeitet ist. Das Lagerschild dichtet durch seine Formgebung den Fettraum gegenüber der Welle ab.

Ferner offenbart die Druckschrift DE 100 33 894 A1 eine Demontagevorrichtung für ein selbsteinstellendes Lager. Die Vorrichtung besitzt einen hülsenähnlichen Körper, der zwischen dem äußeren Lagerring und einer sich axial erstreckenden Wandung des Gehäuses angeordnet ist, Mittel zum axialen Bewegen des Körpers in Bezug auf das Gehäuse in seinem gelösten Zustand und Folgemittel, die an dem hülsenähnlichen Körper vorgesehen sind, um den inneren und äußeren Lagerring dazu zu bringen, Axialbewegungen des hülsenähnlichen Körpers in einer Demontagerichtung zu folgen.

Die Aufgabe der vorliegenden Erfindung besteht somit darin, einen Permanentmagnet-Generator vorzuschlagen, bei dem ein Lagerwechsel leichter durchführbar ist.

Erfindungsgemäß wird diese Aufgabe gelöst durch einen Permanentmagnet-Generator nach Anspruch 1.

In vorteilhafter Weise übt das erfindungsgemäße Rotorstützschild nicht nur Lagerschildfunktionalität, sondern auch Abdichtfunktionalität hinsichtlich einer Fettkammer des Wälzlagers aus. Aufgrund dieser Abdichtfunktionalität, bei der eine Fettkammer gegenüber der Welle abgedichtet wird, liegt das Rotorstützschild sehr nahe an der Welle an, so dass bei einem Austausch des Lagers die Welle ohne weiteres auf dem Rotorstützschild abgestützt werden kann. In der Regel ist der Lichtspalt deutlich geringer als der Luftspalt zwischen Rotor und Stator, so dass auch bei einem Permanentmagnet-Generator (d.h. einem mit permanentmagneterregten Generator) ein Lageraustausch ohne weiteres möglich ist, ohne dass der Rotor mit dem Stator in Kontakt gerät.

Vorzugsweise ist das Rotorstützschild einteilig ausgebildet. Es ist dabei so geformt, dass es praktisch ein Lagerschild bildet, an das einstückig ein Innenfettkammerdeckel angeformt ist.

Darüber hinaus kann das Rotorstützschild eine umlaufende Nut aufweisen, die einen Teil einer Fettkammer für das Wälzlager bildet. Dadurch können zusätzliche Elemente eingespart werden, die speziell eine Fettkammer bilden müssen.

Der Abstand zwischen Rotorstützschild und Welle ist im betriebsbereiten Zustand der elektrischen Maschine günstigerweise geringer als 0,5 mm. Dieser geringe Abstand ist insbesondere bei großen Maschinen in der Regel kleiner als der Luftspalt zwischen Rotor und Stator. Damit gerät der Rotor mit dem Stator auch dann nicht in Kontakt, wenn ein Lager aus der elektrischen Maschine entnommen wird.

Zwischen dem Lageraußenring und dem Rotorstützschild ist eine Abziehvorrichtung angeordnet, um das Wälzlager von der Welle abziehen zu können. Hierdurch lässt sich das Abziehen des Wälzlagers ohne hohen Aufwand realisieren.

Speziell kann die Abziehvorrichtung ringförmig ausgebildet und mehrere Gewindebohrungen aufweisen, in die zum Abziehen des Wälzlagers Schrauben einschraubbar sind, die sich zur Erzeugung einer axialen Abziehkraft an dem Rotorstützschild abstützen. Somit sind zum Abziehen des Wälzlagers lediglich einige wenige Schrauben in die Abziehvorrichtung einzuschrauben.

Weiterhin ist an das Rotorstützschild eine Nabe für das Wälzlager angeschraubt. Eine derartige Nabe sorgt einerseits für eine stabile Lagerung und ermöglicht andererseits einen einfachen Lagertausch.

Ferner kann ein Außenfettkammerdeckel zum Abdichten der Fettkammer der Lagereinheit nach außen an der Nabe angeschraubt sein. So entsteht aus den Komponenten Außenfettkammerdeckel, Lagereinheit, Nabe und Rotorstützschild eine kompakte Lagereinheit mit Fettkammer und leicht austauschbarem Lager. Des Weiteren besitzt das Rotorstützschild einen Zentrierabschnitt, der gewährleistet, dass die Welle mit Lagereinheit beim Anschrauben der Nabe an das Rotorstützschild in dem Rotorstützschild zentriert ist. Der Zentrierabschnitt sorgt also dafür, dass der Rotor nach dem Lagerwechsel bei der Montage automatisch von dem Rotorstützschild abhebt und in die gewünschte zentrierte Position gebracht wird.

Wie bereits angedeutet wurde, sollte vermieden werden, dass der Rotor beim Lagertausch mit dem Stator in Berührung gerät.

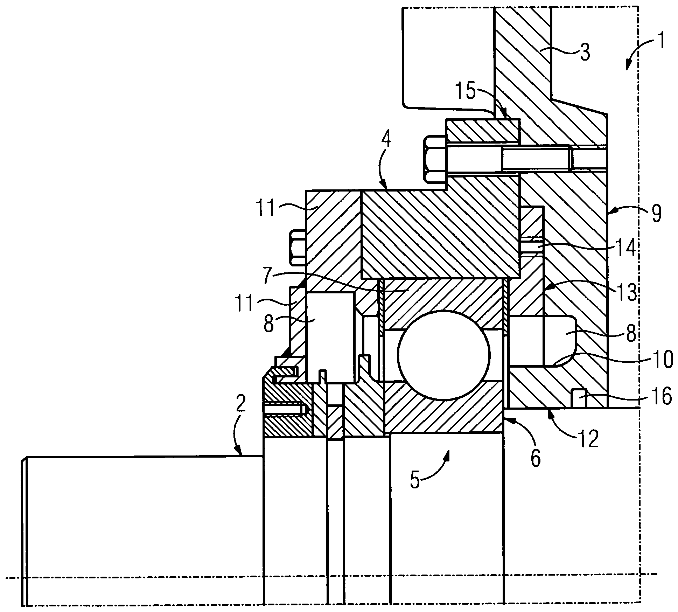

Die vorliegende Erfindung wird nun anhand der beigefügten Zeichnung näher erläutert, die einen Querschnitt durch einen Lagerabschnitt einer elektrischen Maschine zeigt.

Die nachfolgend näher geschilderten Ausführungsbeispiele stellen bevorzugte Ausführungsformen der vorliegenden Erfindung dar.

Die Figur zeigt ein Rotorstützschild 1, das typischerweise an der Stirnseite einer elektrischen Maschine angeordnet ist. Es kann somit ähnlich einem Lagerschild als Teil des Gesamtgehäuses der elektrischen Maschine betrachtet werden. In der Figur ist lediglich derjenige vergrößerte Abschnitt des Rotorstützschilds 1 dargestellt, der sich im Zentrum der elektrischen Maschine, d.h. in der Nähe der Welle 2 des weiter nicht dargestellten Rotors befindet. Das Rotorstützschild 1 besitzt einen Lagerschildabschnitt 3, an dem eine Nabe 4 angeschraubt ist. Zwischen der Nabe 4 und einem entsprechenden Abschnitt der Welle 2 befindet sich ein Wälzlager 5. Der Innenring 6 des Wälzlagers 5 ist unmittelbar auf die Welle 2 aufgepresst. Der Außenring 7 des Wälzlagers 5 wird von der Nabe 4 gestützt. Damit ist die Welle 2 in konventioneller Weise über eine Nabe 4 gelagert.

Darüber hinaus wird das Lager von dem Fett einer Fettkammer 8 geschmiert. Die Fettkammer 8 erstreckt sich in axialer Richtung beidseitig des Wälzlagers 5. Im Inneren der elektrischen Maschine wird die Fettkammer 8 durch einen Innendeckelabschnitt 9 mit Dichtung (Filzring 16) zwischen Welle und Rotorstützschild abgedichtet, der einteilig mit dem Lagerschildabschnitt 3 verbunden ist und mit diesem das Rotorstützschild 1 bildet. Um ein gewünschtes Volumen der Fettkammer 8 gewährleisten zu können, besitzt der Innendeckelabschnitt 9 eine umlaufende Nut 10, in die Fett eingepresst werden kann. Der Innendeckelabschnitt 9 reicht nahezu bis zu einem korrespondierenden Abschnitt der Welle 2. Zwischen beiden Komponenten verbleibt ein in der Figur nicht erkennbarer Spalt 12, der in der Regel kleiner als 0,5 mm ist und beispielsweise 0,3 mm beträgt. Durch diesen geringen Spalt 12 und Dichtung 16 ist die Fettkammer 8 mit dem Innendeckelabschnitt 9 gegenüber der Welle 2 abgedichtet. Fett der Fettkammer 8 kann somit nicht in den Innenraum der elektrischen Maschine dringen. Nach außen hin wird die Fettkammer 8 durch einen Außendeckel 11 abgeschlossen. Dieser Außendeckel 11 der Fettkammer 8 ist auf die Nabe 4 axial aufgeschraubt.

Zwischen dem Innendeckelabschnitt 9 einerseits und der Nabe 4 sowie dem Lageraußenring 7 andererseits ist eine Abziehvorrichtung 13 vorgesehen. Im montierten Zustand hat die Abziehvorrichtung 13, die ringförmig ausgebildet ist, nahezu keine Wirkung. Die Abziehvorrichtung 13 wird lediglich zum Abziehen des Wälzlagers 5 benötigt. Hierzu besitzt die Abziehvorrichtung 13 beispielsweise am Umfang verteilt Gewindebohrungen 14, in die zum Abziehen Schrauben (nicht dargestellt) eingeschraubt werden, welche sich dann an dem Innendeckelabschnitt 9 abstützen. Das Abziehen des Wälzlagers 5 ist natürlich erst dann möglich, wenn die Nabe 4 einschließlich Außendeckel 11 von dem Rotorstützschild 1 abgeschraubt wurde.

Nachfolgend wird die Funktion des erfindungsgemäßen Rotorstützschilds näher erläutert. Beim Austausch des Wälzlagers 5 wird, wie bereits angedeutet, zunächst die Nabe 4 einschließlich Außendeckel 11 von dem Permanentmagnet-Generator abgeschraubt. Damit verliert das Wälzlager 5 radiale Stütze. Da jedoch der Spalt 12 sehr klein ist, wird die Welle bei entnommener Nabe 4 radial von dem Rotorstützschild 1, speziell dem Innendeckelabschnitt 9, gestützt. Da zwischen Welle 2 und Innendeckelabschnitt 9 lediglich ein Spiel von 0,3 mm besteht, muss keine Abstützung der Welle 2 durch zusätzliches Gerät erfolgen. Außerdem kann sich ein mit Permanentmagneten bestückter Rotor nicht an dem Stator anlegen und dort mit enorm hohen Kräften haften bleiben.

Besonders vorteilhaft lässt sich ein derartiges erfindungsgemäßes Rotorstützschild 1 bei Windkraftanlagen einsetzen. Hierdurch lässt sich nämlich ein Lagerwechsel in der Gondel einer Windkraftanlage mit Permanentmagnetmaschine durchführen, ohne dass sich der Rotor an dem Stator anlegen kann. Dieser wäre andernfalls durch die hohen Kräfte in der Gondel nicht mehr zu lösen.

Das Abziehen des Wälzlagers 5 sollte von außen möglich sein, ohne den Rotor komplett aus dem Stator entnehmen zu müssen. Da das Wälzlager 5 auf die Welle 2 aufgepresst ist, sind entsprechend hohe Kräfte notwendig, um es abzuziehen. In dem vorliegenden Beispiel ist daher in dem Innendeckelabschnitt 9 die ringförmige Abziehvorrichtung 13 integriert. Bei abgenommener Nabe 4 sind die Gewindebohrungen 14 der Abziehvorrichtung 13 zugänglich. Die Axialkräfte zum Abziehen werden, wie bereits angedeutet wurde, durch Schrauben erzeugt, welche sich an dem Innendeckelabschnitt 9 abstützen. Dabei drückt ein innerer Radialabschnitt der Abziehvorrichtung 13 an den Lageraußenring 7 des Wälzlagers 5. Das Wälzlager 5 lässt sich so von der Welle 2 abdrücken.

Nachdem ein neues Lager auf die Welle 2 montiert wurde, wird die Nabe 4 einschließlich Außendeckel 11 wieder an das Rotorstützschild 1 angeschraubt. Da sich jedoch die Welle 2 auf dem Rotorstützschild 1 abstützt, muss sie, um ihre betriebsbereite Position zu erlangen, in radialer Richtung angehoben werden. Hierzu dient als Zentrierabschnitt eine Formschräge 15 an dem Rotorstützschild 1 und eine entsprechende Passung an der Nabe 4. Die Formschräge 15 ergibt eine konische Vertiefung in dem Rotorstützschild 1, die in eine zylindrische Passung übergeht. Wird die Nabe 4 mit ihrer Passung in diese Vertiefung eingepasst, so wird dadurch automatisch eine Zentrierung der Welle 2 erreicht. Im speziellen Fall erfolgt durch das Anschrauben der Nabe 4 ein Anheben der Welle um 0,3 mm und damit eine Selbstzentrierung der Welle. Alternativ kann selbstverständlich zur Selbstzentrierung der Welle auch eine Passung mit Formschräge an der Nabe und eine entsprechende Passung an dem Rotorstützschild vorgesehen sein. Gegebenenfalls kann zusätzlich ein Hubzylinder verwendet werden, um den Läufer anzuheben.

Das erfindungsgemäße Rotorstützschild 1, mit dem der Rotor beim Lagerwechsel abgestützt werden kann, bringt zahlreiche Vorteile mit sich. Zum einen können Kosten und Platz für Zusatzgeräte wie Bordkran in der Gondel einer Windanlage eingespart werden. Des Weiteren muss das Lager- bzw. Rotorstützschild (beispielsweise 250 kg) nicht vom Generator entfernt werden und auf der dünnen Gondelwand abgestellt werden, was zu Sicherheitsproblemen führen würde. Außerdem ist durch das erfindungsgemäße Rotorstützschild ein Lagerwechsel auf engstem Raum möglich.

## Patentansprüche

1. Elektrische Maschine mit
- einer Welle (2), auf die ein Rotor montiert ist, und
- einem Wälzlager (5), mit dem die Welle (2) drehbar gelagert ist, wobei der Innenring des Wälzlagers (5) unmittelbar auf die Welle (2) aufgepresst ist,
- einem Rotorstützschild (1),
• an dem das Wälzlager (5) befestigt ist, und
• das so dimensioniert ist, dass es die Welle (2) bei entferntem Wälzlager zu stützen vermag, wobei der Abstand zwischen Rotorstützschild (1) und Welle (2) in betriebsbereitem Zustand der elektrischen Maschine geringer als der Luftspalt zwischen Rotor und Stator der elektrischen Maschine ist, **dadurch gekennzeichnet, dass** die elektrische Maschine ein Permanentmagnet-Generator für eine Windkraftanlage ist, und
- das Rotorstützschild (1) eine Fettkammer (8) des Wälzlagers (5) gegenüber der Welle (2) abdichtet, und
- zwischen dem Lageraußenring (7) und dem Rotorstützschild (1) eine Abziehvorrichtung (13) angeordnet ist, um das Wälzlager von der Welle (2) abziehen zu können, und
- an das Rotorstützschild (1) eine Nabe (4) für das Wälzlager (5) angeschraubt ist und,
- das Rotorstützschild (1) einen Zentrierabschnitt (15) besitzt, der gewährleistet, dass die Welle (2) mit Wälzlager (5) beim Anschrauben der Nabe (4) an das Rotorstützschild (1) in dem Rotorstützschild (1) zentriert wird.

2. Elektrische Maschine nach Anspruch 1, wobei das Rotorstützschild (1) einteilig ausgebildet ist.

3. Elektrische Maschine nach einem der vorhergehenden Ansprüche, wobei das Rotorstützschild (1) eine umlaufende Nut (10) aufweist, die einen Teil der Fettkammer (8) für das Wälzlager (5) bildet.

4. Elektrische Maschine nach einem der vorhergehenden Ansprüche, wobei der Abstand zwischen Rotorstützschild (1) und Welle (2) in betriebsbereitem Zustand der elektrischen Maschine geringer als 0,5 mm ist.

5. Elektrische Maschine nach einem der Ansprüche 1 bis 4, wobei die Abziehvorrichtung (13) ringförmig ausgebildet ist und mehrere Gewindebohrungen (14) aufweist, in die zum Abziehen des Wälzlagers Schrauben einschraubbar sind, die sich zur Erzeugung einer axialen Abziehkraft an dem Rotorstützschild (1) abstützen.

6. Elektrische Maschine nach einem der vorhergehenden Ansprüche, wobei ein Außenfettkammerdeckel (11) zum Abdichten der Fettkammer (8) des Wälzlagers (5) nach außen an der Nabe (4) angeschraubt ist.

## Claims

1. Electrical motor, with
- a shaft (2) on which a rotor is mounted and
- a rolling bearing unit (5) by means of which the shaft (2) is mounted rotatably, wherein the inner ring of the rolling bearing (5) is pressed directly onto the shaft (2),
- a rotor support shield (1),
• to which the rolling bearing (5) is fastened, and
• which is dimensioned such that it can support the shaft (2), with the rolling bearing removed, wherein the clearance between the rotor support shield (1) and the shaft (2) is smaller than the air gap between the rotor and the stator of the electrical motor in the operational ready state of the electrical motor,
**characterized in that**
the electrical motor is a permanent magnet generator for a wind turbine, and
- the rotor support shield (1) seals off a grease chamber (8) of the rolling bearing (5) with respect to the shaft (2), and
- a draw-off device (13) is arranged between the bearing outer ring (7) and the rotor support shield (1), so that the rolling bearing can be drawn off from the shaft (2), and
- a hub (4) for the rolling bearing (5) is screwed to the rotor support shield (1), and
- the rotor support shield (1) possesses a centering portion (15) which ensures that the shaft (2) with rolling bearing (5) is centered in the rotor support shield (1) when the hub (4) is screwed to the rotor support shield (1).

2. Electrical motor according to Claim 1, the rotor support shield (1) being formed as one part.

3. Electrical motor according to one of the preceding claims, the rotor support shield (1) having a peripheral groove (10) which forms part of the grease chamber (8) for the rolling bearing (5).

4. Electrical motor according to one of the preceding claims, the clearance between the rotor support shield (1) and the shaft (2) being smaller than 0.5 mm in the operationally ready state of the electrical motor.

5. Electrical motor according to one of Claims 1 to 4, the draw-off device (13) being of ring-shaped design and having a plurality of threaded bores (14), into which can be screwed, for drawing off the rolling bearing, screws which are supported on the rotor support shield (1) in order to generate an axial draw-off force.

6. Electrical motor according to one of the preceding claims, an external grease chamber cover (11) for sealing off the grease chamber (8) of the rolling bearing (5) outwardly being screwed to the hub (4).

## Revendications

1. Machine électrique, comprenant
- un arbre (2), sur lequel est monté un rotor et
- un palier (5) à roulement, par lequel l'arbre (2) est monté tournant, la bague intérieure du palier (5) à roulement étant appliquée directement sur l'arbre (2),
- un flasque (1) d'appui du rotor,
• sur lequel le palier (5) à roulement est fixé et
• qui a des dimensions telles qu'il permet d'appuyer l'arbre (2) lorsque le palier à roulement est retiré, dans laquelle la distance entre le flasque (1) d'appui du rotor et l'arbre (2), lorsque la machine électrique est dans un état prêt à fonctionner, est plus petite que l'entrefer entre le rotor et le stator de la machine électrique,
**caractérisée en ce que**
la machine électrique est une génératrice à aimant permanent pour une éolienne et
- le flasque (1) d'appui du rotor rend étanche une chambre (8) de lubrification du palier (5) à roulement par rapport à l'arbre (2) et
- un dispositif (13) de retrait est disposé entre la bague (7) extérieure du palier et le flasque (1) d'appui du rotor, afin de pouvoir retirer le palier à roulement de l'arbre (2) et
- un moyeu (4) pour le palier (5) à roulement est vissé sur le flasque (1) d'appui du rotor et
- le flasque (1) d'appui du rotor a une partie (15) de centrage, qui assure que l'arbre (2) avec le palier (5) à roulement est, lors du vissage du moyeu (4) sur le flasque (1) d'appui du rotor, centré dans le flasque (1) d'appui du rotor.

2. Machine électrique suivant la revendication 1, dans laquelle le flasque (1) d'appui du rotor est en une seule pièce.

3. Machine électrique suivant l'une des revendications précédentes, dans laquelle le flasque (1) d'appui du rotor a une rainure (10) faisant le tour, qui forme une partie de la chambre (8) de lubrification du palier (5) à roulement.

4. Machine électrique suivant l'une des revendications précédentes, dans laquelle la distance entre le flasque (1) d'appui du rotor et l'arbre (2) est, lorsque la machine électrique est dans l'état prêt à fonctionner, plus petite que 0,5 mm.

5. Machine électrique suivant l'une des revendications 1 à 4, dans laquelle le dispositif (13) de retrait est annulaire et a plusieurs taraudages (14) dans lesquels, pour le retrait du palier à roulement, peuvent être vissées des vis, qui, pour produire une force de retrait axiale, s'appuient sur le flasque (1) d'appui du rotor.

6. Machine électrique suivant l'une des revendications précédentes, dans lequel un couvercle (11) extérieur de chambre de lubrification est, pour rendre étanche la chambre (8) de lubrification du palier (5) à roulement vers l'extérieur, vissé sur le moyeu (4).
